(19) Europäisches Patentamt
European Patent Office
Office européen des brevets

(11) Publication number: **0 160 951**
**A2**

(12) # EUROPEAN PATENT APPLICATION

(21) Application number: 85105448.6

(22) Date of filing: 03.05.85

(51) Int. Cl.⁴: B 25 B 21/00
B 23 P 19/06

(30) Priority: 04.05.84 JP 88383/84

(43) Date of publication of application:
13.11.85 Bulletin 85/46

(84) Designated Contracting States:
DE SE

(71) Applicant: KABUSHIKI KAISHA KOMATSU SEISAKUSHO
3-6, 2-chome Akasaka
Minato-ku Tokyo 107(JP)

(72) Inventor: Ohta, Kazuo
5-25, 2-chome Ueno
Hirakata-shi Osaka-fu(JP)

(72) Inventor: Tokuda, Mineo
5-25, 2-chome Ueno
Hirakata-shi Osaka-fu(JP)

(72) Inventor: Kaneko, Masanori
No. 28-28 Murano-honmachi
Hirakata-shi Osaka-fu(JP)

(72) Inventor: Ono, Takashi
5-25, 2-chome Ueno
Hirakata-shi Osaka-fu(JP)

(72) Inventor: Fuchigami, Masao
417 Higashi 5-1 Yoshino-gaito
Yawata Yawata-shi Kyoto-fu(JP)

(74) Representative: Patentanwälte TER MEER - MÜLLER - STEINMEISTER
Artur-Ladebeck-Strasse 51
D-4800 Bielefeld 1(DE)

(54) **Improvement of screw tightening apparatus.**

(57) A screw tightening apparatus has a stand, a support framework attached slidably in the vertical direction to the stand, an arm section extending horizontally from and connected turnably in a horizontal plane to the support framework, a driving unit mounted on the base end of the arm section for turning the arm section, a screw tightening unit mounted on the leading end of the arm section, and a reaction force absorbing mechanism acted upon tightening a screw. The reaction force absorbing mechanism is provided in the screw tightening unit or the arm section.

FIG. 4

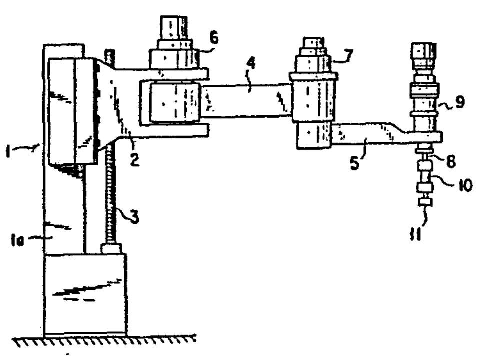


EP 0 160 951 A2

# IMPROVEMENT OF SCREW TIGHTENING APPARATUS

## BACKGROUND OF THE INVENTION

### Field of the invention

This invention pertains to an improvement of a screw tightening apparatus such as, for example, an industrial screw tightening robot machine.

### Description of the prior art

The prior art industrial screw tightening apparatus comprises a stand, a support framework attached to the stand in such a manner as to be moved vertically, a first arm extending horizontally from the support framework and connected to the framework in such a manner as to be turned freely in a horizontal plane, a second arm extending from the first arm and connected to the first arm so as to be turned freely in a horizontal plane, and a screw tightening unit mounted on the leading end of the second arm.

Driving means are connected to the base ends of the above-mentioned first and second arms to turn them, respectively, to enable the screw tightening unit to be moved in a wide range.

Further, since a reaction force torque is exerted on each of the arms when a screw is tightened by the screw tightening unit, a brake means adapted to absorb the torque is assembled with each of the above-mentioned driving means.

In the prior art screw tightening apparatus, however, since each brake is mounted on a servomotor, and a reduction gear is interposed between each of the brake means and each of the arms, if a high torque is exerted on each of the arms, even when the brake means are actuated, the arms will turn somewhat relative to the brake means due to insufficient rigidity of the reduction gears. For this reason, if a predetermined torque is exerted on a screw tightening means, for example, a socket wrench etc. mounted on the leading end of the screw tightening unit, the screw tightening unit per se tends to move transversely to some extent. However, since the position of the screw to be tightened is fixed, the above-mentioned transverse movement of the screw tightening unit is prevented by the engagement of the screw being tightened and the screw tightening unit. Therefore, unless the screw to be tightened is disengaged from the screw tightening unit, the screw being tightened is subjected to not only the tightening torque, but also a transverse load required to prevent the transverse movement of the screw tightening unit, and as a result, there occurs such a disadvantage as a deformation of the screw or the members to be tightened by the screw.

For this reason, the prior art screw tightening apparatus could not be used to tighten large-sized screws which require a high tightening torque.

Therefore, in order to tighten a screw having a large outside diameter by means of the prior art screw tightening apparatus, it is necessary to mount a brake means of a large capacity on the turning base arm of each arm, separately from the brake means assembled with the driving means of each arm, and also increase the rigidity of the arms themselves so as to prevent possible deformation or deflection thereof. However, this will complicate the structure of the screw tightening apparatus and increase the size thereof thereby increasing the cost thereof.

Further, besides the above-mentioned prior art arrangement, a screw tightening apparatus has been envisaged which is constructed such that a screw tightening unit can be stopped by means of a servomotor at a predetermined position, and the reaction force exerted on the screw tightening unit can be held by the driving force generated by the servomotor, not by the brake means. However, the screw tightening apparatus of this type has also disadvantage similar to that of the aforementioned apparatus derived from the deflection of the arms and other connecting members.

## SUMMARY OF THE INVENTION

The present invention has been contemplated and devised in view of the above-mentioned circumstances, and has for its object to provide a screw tightening apparatus which is neither large-sized and complicated in structure and which enables a large-sized screw to be tightened by a comparatively inexpensive means.

Another object of the present invention is to provide a screw tightening apparatus wherein the screw tightening unit mounted on the leading end of the second arm is provided with means for absorbing the reaction force exerted on the screw tightening unit when a large-sized screw is tightened.

To achieve the above-mentioned objects, according to a first aspect of the present invention, there is provided a screw tightening apparatus, characterized by that it comprises a stand, a support framework attached to said stand in such a manner as to be moved freely in the vertical direction, first and second arm means extending from said support framework in the horizontal direction and connected to said support framework so as to be turned freely relative thereto in a horizontal plane, driving means mounted on the base end of said arm means for turning the latter; a screw tightening unit mounted on said second arm means; and means for absorbing the reaction force exerted on said screw tightening unit when a screw is tightened thereby.

According to a second aspect of the present invention, there is provided a screw tightening apparatus, characterized by that said reaction force absorbing means is a driven joint interposed between the connection of said second arm means to the screw tightening unit and a screw tightening means attached to the leading end of the unit.

According to a third aspect of the present invention, there is provided a screw tightening apparatus, characterized by that said reaction force absorbing means is a driven joint attached to the leading end of said second arm means.

## BRIEF DESCRIPTION OF THE DRAWINGS

The above and many other advantages, features and additional objects of the present invention will become manifest to those versed in the art upon making reference to the following detailed description and accompanying drawings in which preferred structural embodiments incorporating the principles of the present invention are shown by way of illustrative example.

## BRIEF DESCRIPTION OF THE DRAWING

Fig. 1 is a schematic side elevational view of a prior art screw tightening robot;

Fig. 2 is a diagram showing the relationship between the reaction force exerted on a first arm and the angle defined between the first arm and a second arm when a screw is tightened by the conventional screw tightening robot shown in Fig. 1;

Fig. 3 is a diagram showing the relationship between span L between the turning center of the base end of the first arm and the center of screw tightening position and the reaction force generated when a screw is tightened by means of a prior art screw tightening robot illustrated in Fig. 1;

Fig. 4 is an overall schematic side elevational view showing one embodiment of screw tightening apparatus according to the present invention;

Fig. 5 is a longitudinal sectional view showing the principal part of the screw tightening apparatus shown in Fig. 4;

Fig. 6 is a view of the apparatus of Fig. 5 looking in the direction indicated by arrow VI;

Fig. 7 is a sectional view of the apparatus shown in Fig. 5 taken along line VII-VII;

Fig. 8 is a longitudinal sectional view showing another embodiment of the principal part of the screw tightening apparatus according to the present invention;

Fig. 9 is a longitudinal sectional view showing a further embodiment of the principal part of the screw tightening apparatus according to the present invention;

Fig. 10 is a sectional view of the principal part shown in Fig. 9 taken along line X-X;

Fig. 11 is an overall schematic side elevational view showing a still further embodiment of the screw tightening apparatus according to the present invention.

DETAILED DESCRIPTION OF THE INVENTION

With reference to Figs. 1 to 3, problems encountered when a screw is tightened by means of the prior art screw wrenching apparatus will be explained in the first place.

In Fig. 1 showing a schematic side elevation of the prior art screw tightening robot, a first arm "b" is connected to a support frame "a" so as to be turned freely in a horizontal plane, and a second arm "c" is connected to the first arm "b" in such a manner as to be turned in a horizontal plane. The second arm "c" has a screw tightening unit "d" mounted on the free leading end thereof. The arrangement is made such that the first and second arms "b" and "c" can be turned by means of driving means "e" and "f",

respectively, which are fitted to the respective turning base ends thereof to enable the screw tightening unit "d" to be moved in a wide range.

In a prior art screw tightening robot having a first arm "b" whose span $\ell_1$ is 700 mm and a second arm "c" whose span $\ell_2$ is 550 mm, the screw tightening unit "d" tends to move transversely by 2 to 6 mm when a screw is tightened.

Fig. 2 is a graph showing changes in the reaction force "F" caused by the transverse movement of the screw tightening unit "d" relative to changes in the angle $\theta$ defined between the first arm "b" and the second arm "c".

Fig. 3 is a graph showing changes in the reaction force "F" relative to changes in the span "L" between the turning center of the first arm "b" and the center of screw tightening position.

Both figures 2 and 3 show the results obtained when a prior art screw tightening robot having a first arm "b" whose span $\ell_1$ is 630 mm and a second arm "c" whose span $\ell_2$ is 400 mm is used to apply different turning torques to the center of the screw tightening position of the screw tightening unit "d" mounted onto the free leading end of the second arm "c" and wherein the angle between the first arm "b" and the second arm "c" is defined as $\theta$.

As can be seen from Figs. 2 and 3, as the angle $\theta$ defined between the first and second arms "b" and "c" is reduced, an extremely high reaction force is exerted by the screw tightening unit "d" on the screw to be tightened. As a result, members to be tightened will be subjected to adverse effect such as deformation and failure etc. Further, the turning torque T applied to a screw whose outside diameter is 10 mm is 10 kg·m, whilst the turning torque T applied to a screw whose outside diameter is 24 mm becomes as high as 100 kg·m. For this reason, the prior art screw tightening robot could be used to tighten only screws whose outside diameters are in the range of 6 to 10 mm.

A screw tightening apparatus according to the present invention will be described below with reference to Figs. 4 to 11.

Fig. 4 is an overall schematic side elevational view showing one embodiment of screw tightening apparatus according to the present invention.

In the drawing, reference numeral 1 denotes a screw tightening unit; 1a a stand thereof; 2a a support framework supported by the stand 1a in such a manner as to be moved freely in the vertical direction, and 3 a screw-threaded rod for moving the support framework vertically, the screw-threaded rod 3 being connected to a driving means not shown in the drawing. Reference numeral 4 denotes a first arm supported by the support framework 2 in such a manner as to be turned freely in a horizontal plane, and 5 a second arm supported at the leading end of the first arm 4 so as to be turned freely in a horizontal plane. The turning base portions of the arms 4 and 5 are located in the support framework 2 and the first arm 4, and connected to driving means 6 and 7, respectively. The driving means 6 and 7 has brake means mounted therein. Further, fixedly secured to the leading end of the second arm 5 is a screw tightening unit 9 having a wrench drive shaft 8 at the lower end thereof.

Reference numeral 10 denotes a driven joint whose base end is adapted to be detachably connected to the wrench drive shaft 8 of the screw tightening unit 9. Further, the leading end of the driven joint 10 is adapted to be detachably connected to a socket wrench 11.

The above-mentioned driven joint 10 is constructed as shown in Fig. 5, and comprises a connecting cylinder 12, an input member 13 adapted to be connected to the wrench drive shaft 8, and an output member 14 adapted to be connected to the socket wrench 11. The input member 13 and the output member 14 are fitted in the connecting cylinder 12 with a small clearance kept between the inner wall thereof and the periphery of the engaging portions of the input and output members having a square section so that they can be moved freely in the axial direction and there is a small idle play in the radial direction. Further, the input and output members 13 and 14 are biased by springs 16 and 17, respectively, in the directions away from each other. The input and output members 13 and 14 are each supported at one end thereof by a spring retainer seat 12a formed in the intermediate portion of the connecting cylinder 12. Reference numerals 18 and 19 denote cover members adapted to prevent the input and output members 13 and 14 from slipping out from the connecting cylinder 12. The fitting portions of the cover members 18, 19 and the input and output members 13, 14 are tapered in shape, and the input and output members 13 and 14 biased by springs 16 and 17, respectively, are arranged coaxially with the connecting cylinder 12. The idle play between the connecting cylinder 12 and the input and output members 13 and 14 is such that the leading end of the output member 14 may be moved by 2 to 10 mm relative to the wrench drive shaft 8 in the direction at right angles to the axis thereof.

The effect obtained by tightening a screw of means of the socket wrench 11 connected to the output member 14 of the driven joint 10 which is connected in turn to the leading end of the wrench drive shaft 8 will now be described below.

First of all, the first and second arms 4 and 5 of the screw tightening unit 1 are turned by the driving means 6 and 7, respectively, so as to move the socket wrench 11 connected to the output member 14 of the driven joint 10 to a position immediately above the screw to be tightened. Subsequently, the whole arms 4 and 5 are lowered by means of the screw-threaded rod 3 together with the support framework 2 so as to allow the socket wrench 11 to be engaged with a screw to be tightened. At that time, since the input and output members 13 and 14 of the driven joint 10 are biased by springs 16 and 17 and supported by the connecting cylinder 12 and possess an initial rigidity, the wrench drive shaft 8 of the screw tightening unit 1 is located coaxially with the socket wrench 11.

If, under this condition, the screw tightening unit 9 is driven to rotate the wrench drive unit 9, a reaction force caused by the screw being tightened is exerted on the wrench drive shaft 8. The reaction force exerted on the wrench driven shaft 8 is finally carried by the stand 1a. However, if the component parts between the wrench drive shaft 8 and the stand 1a deflect; that is, as already described with reference to the prior art arrangement, if deflection of the arms 4 and 5 driven by the driving means 6 and 7, respectively, occurs in the direction of rotation, the leading end of the second arm 5 will move in the direction at right angles to the axis thereof by an amount corresponding to the magnitude of the reaction force caused by the screw being tightened, and then stop at that position.

However, since the driven joint 10 is connected to the wrench drive shaft 8 has a transverse flexibility, the displacement of the second arm 5 in the direction of rotation when the screw tightening unit 9 is driven is absorbed by the idle play within the driven joint 10 so that no transverse force is exerted on the screw engaged with the socket wrench 11.

As the screw tightening unit 9 is driven, the driven joint 10 is rotated while it is deflected transversely to thereby enable the screw to be tightened.

Figs. 8 and 9 show two other embodiments of the aforementioned driven joint 10. Fig. 8 shows a construction equivalent to that shown in Fig. 5 except that the spring retainer seat 12a of the connecting cylinder 12 is omitted and the input and output members 13 and 14 are biased by means of a single spring 20 in the directions away from each other.

In the arrangement shown in Fig. 9, an input member 13' is fitted in a connecting member 21 in such a manner as to be freely slidably moved in the axial direction and engaged with the member 21 in the direction of rotation. Further, an output member 14' is connected through a flexible engaging member 22 to the connecting member 21 so that the member 14' may oscillate relative to the connecting member 21. This flexible engaging member 22 is comprised of a hexagonal central portion and two end portions which are integrally formed with the central portion and whose ridgelines define circular-arc in the axial direction. The circular-arc shaped two end portions are adapted to be engaged with the connecting member 21 and the output member 14', respectively. Reference numeral 23 denotes a holding cylinder which accommodates the aforementioned input and output members 13' and 14', and connecting cylinder 22. The holding cylinder 23 is fixedly secured to the wrench drive shaft 8. Further, the leading end of the aforementioned output member 14' is tapered and is fitted in the supplementary, tapered end of the holding cylinder 23 so that the member 14' may be aligned with and held by the holding cylinder 23.

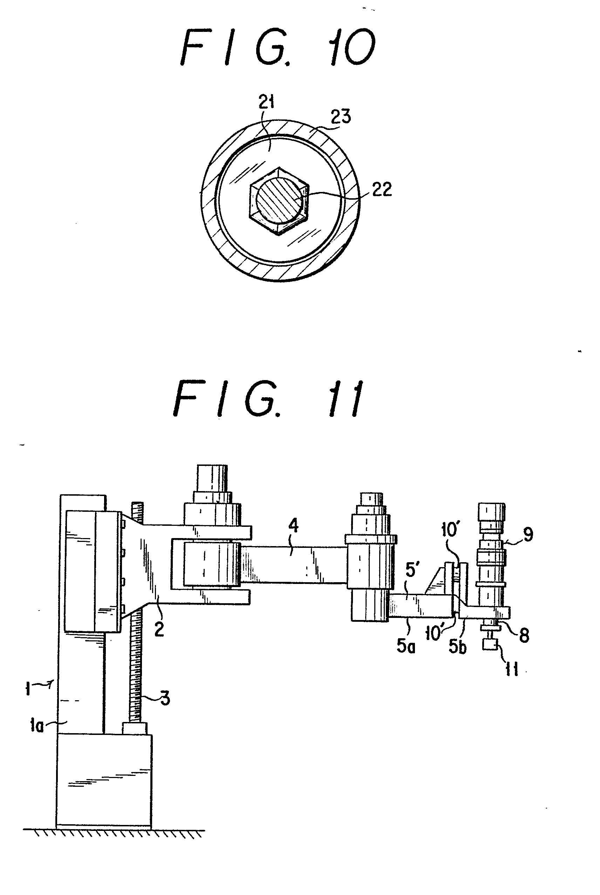

The aforementioned embodiments show arrangements wherein the driven joint 10 is interposed between the wrench drive shaft 8 of the screw tightening unit 9 and the socket wrench 11. However, as shown in Fig. 11, it is possible to divide a second arm 5' on which the screw tightening unit 9 is mounted into two arm members 5a and 5b in the longitudinal direction and connect the two arm members through a driven joint 10' made of an elastic material such as rubber or spring etc. In this case, the socket wrench 11 is connected directly to the wrench drive shaft 8 of the screw tightening unit 9.

Further, in any of the aforementioned embodiments, each of the driven joints has a property to return to its initial conditon so that no influence is given by the driven joint when positioning of the screw holder such as the socket wrench etc. is controlled.

According to the present invention, even if the first arm having the screw tightening unit mounted on the leading end thereof is turned somewhat by a screw tightening torque exerted on the screw tightening unit from a predetermined screw tightening position in the direction at right angles to the axis of rotation of the unit, no transverse force is exerted on the screw to be tightened or wrenched, and large-sized screws whose outside diameters are 10 mm and over and which have so far been unable to be tightened can be tightened without having to additionally install special brake means in each of rotary, driving units of the first and second arms. Therefore, the screw tightening apparatus which enables a large diameter screw to be tightened can be manufactured at a cost and weight which are substantially same as those of small-sized screw tightening apparatuses and its performance can be improved remarkably.

It is to be understood that the foregoing description is merely illustrative of preferred embodiments of the present invention, and that the present invention is not to be limited thereto, but is to be determined by the scope of the appended claims.

WHAT WE CLAIM IS:

1. A screw tightening apparatus, characterized by that it comprises a stand; a support framework attached to said stand in such a manner as to be moved freely in the vertical direction, arm means extending from said support framework in the horizontal direction and connected to said support framework so as to be turned freely relative thereto in a horizontal plane; driving means mounted on the base ends of said arm means for turning the latter; a screw tightening unit mounted on the leading end of said arm means; and means for absorbing the reaction force exerted on said screw tightening unit when a screw is tightened thereby.

2. The screw tightening apparatus as claimed in Claim 1, characterized in that said reaction force absorbing means is a driven joint interposed between the connection part of said screw tightening unit and a screw tightening tool attached to the leading end of the screw tightening unit.

3. The screw tightening apparatus as claimed in Claim 1, characterized in that said reaction force absorbing means is a driven joint attached to the leading end of said arm means.

4. The screw tightening apparatus as claimed in Claim 1, wherein said arm means comprises a first arm turnably connected to said support framework and a second arm turnably connected at the base end thereof to the leading end of said first arm, said first and second arms having driving means, respectively, at their respective base ends.

# FIG. 1

PRIOR ART

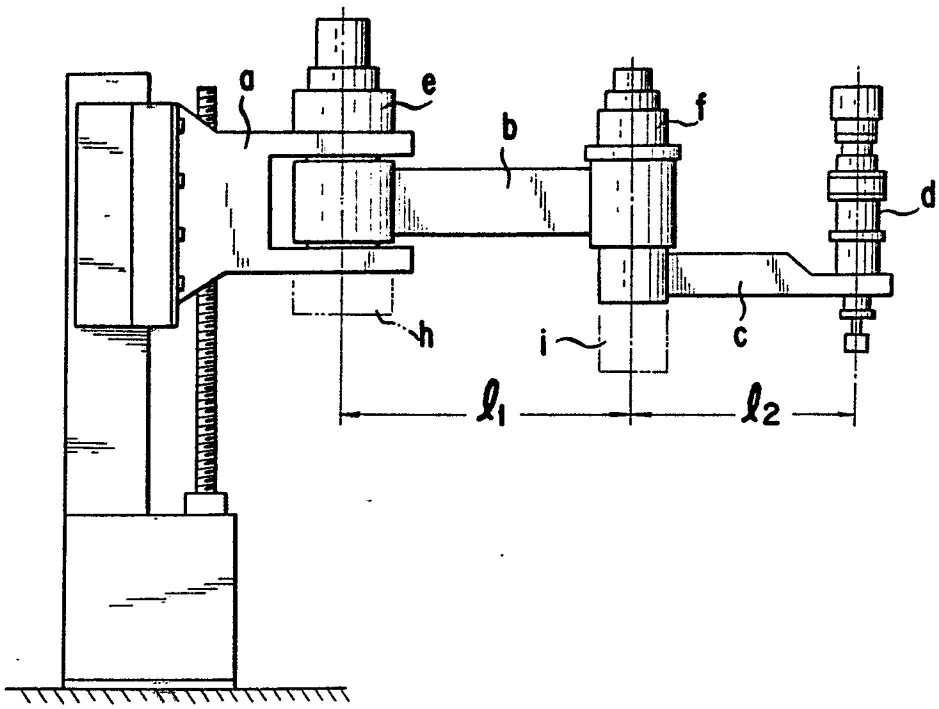

0160951

2/7

# FIG. 2

PRIOR ART

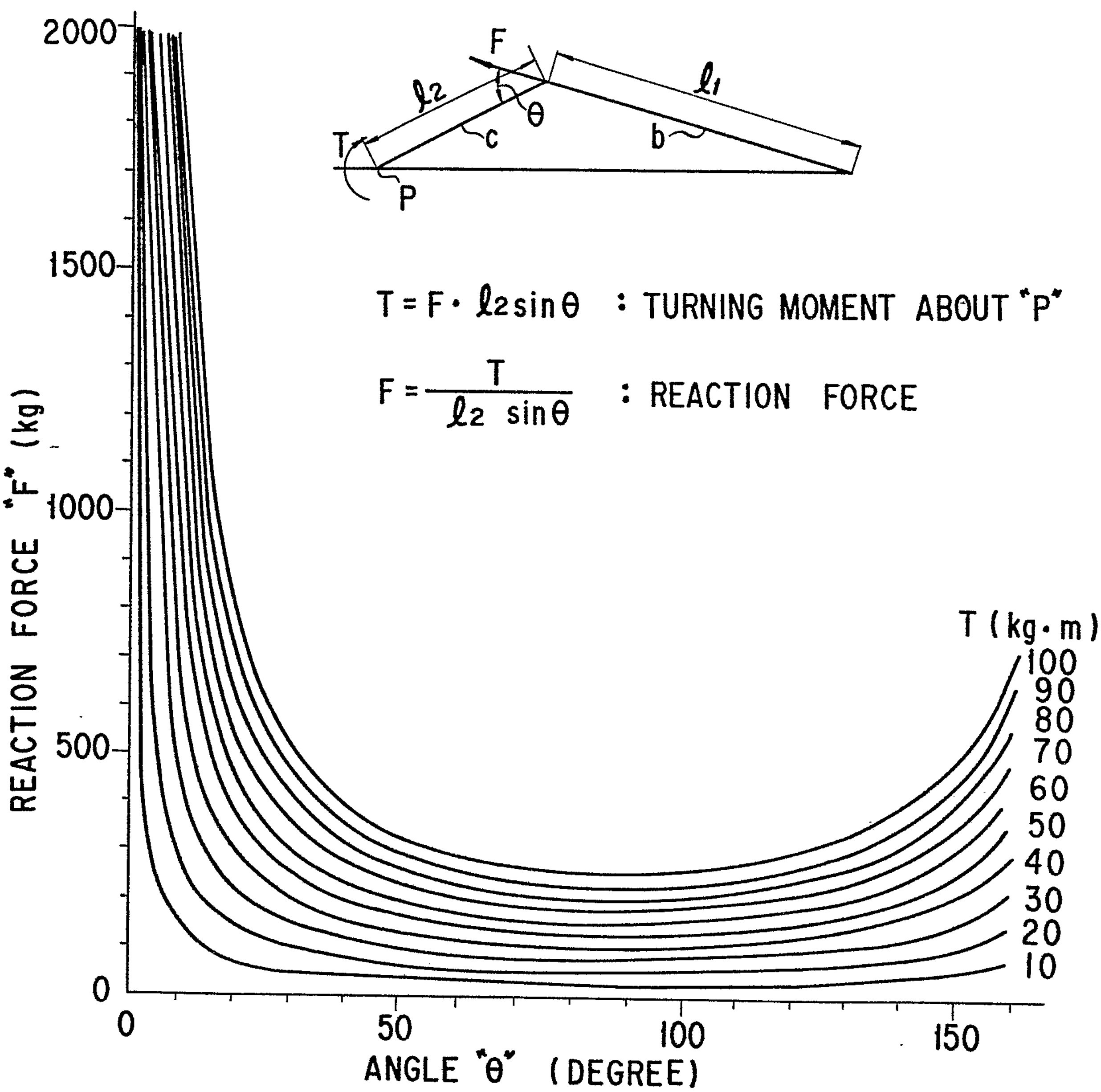

# FIG. 3

PRIOR ART

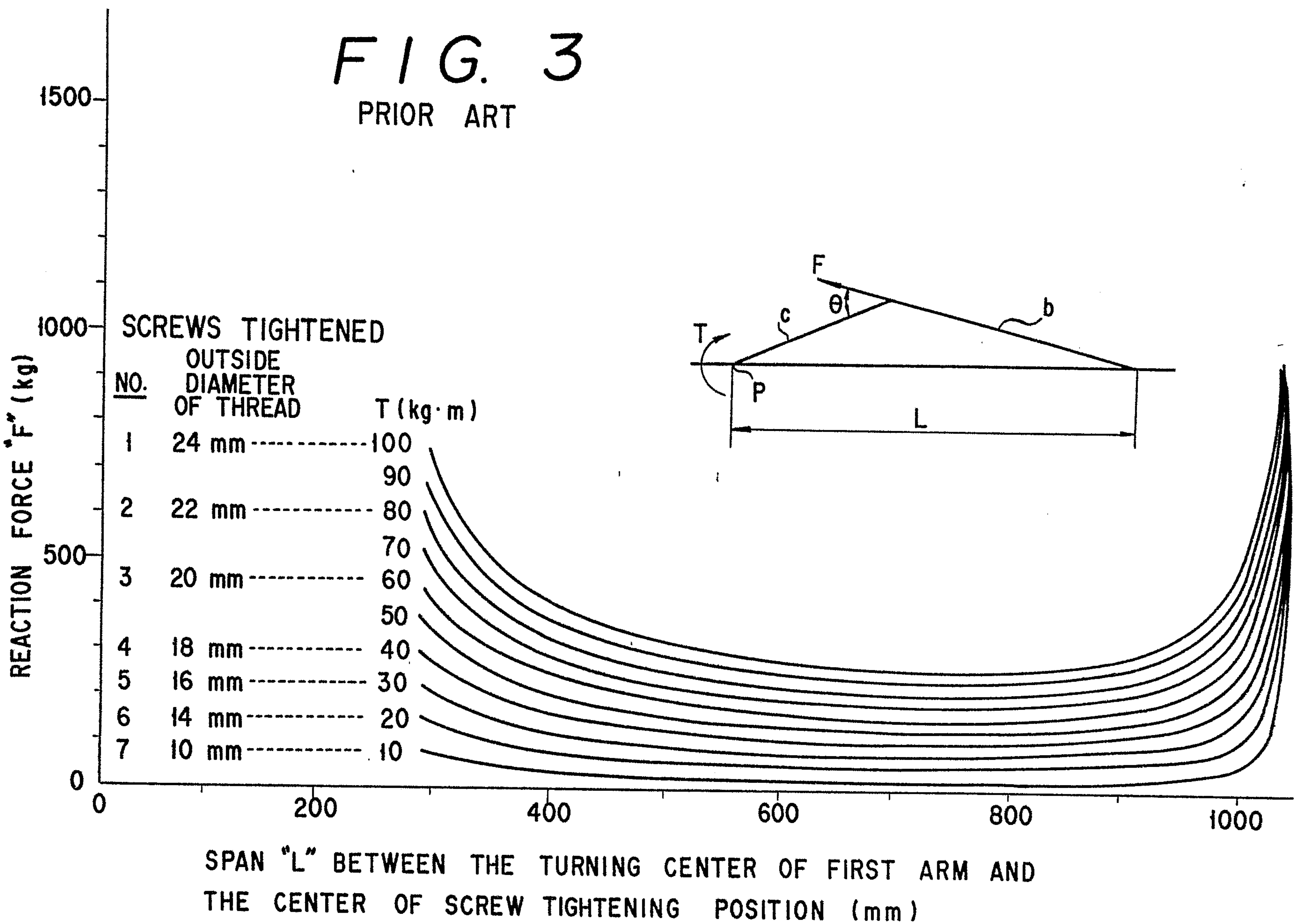

FIG. 4

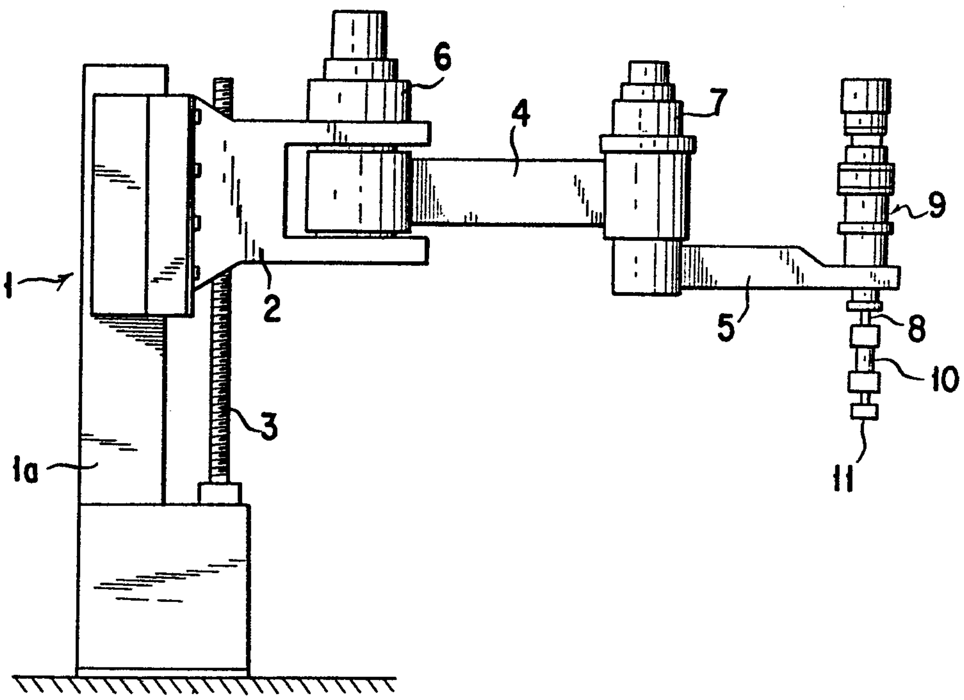

0160951



FIG. 5

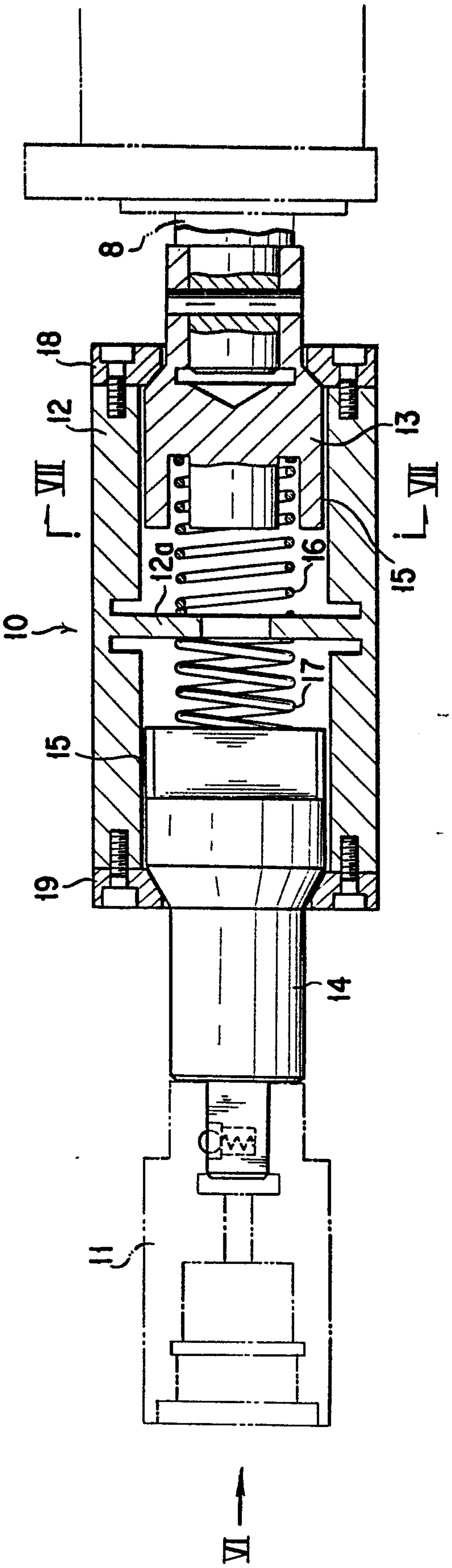


FIG. 7

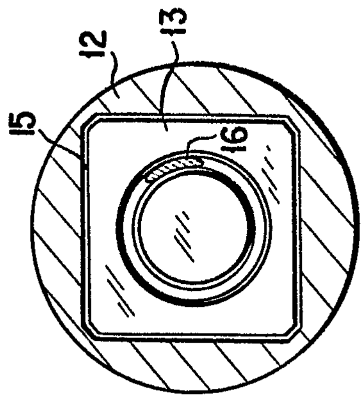


FIG. 6

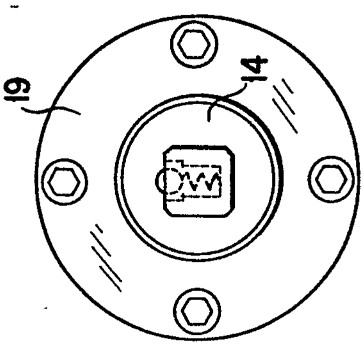

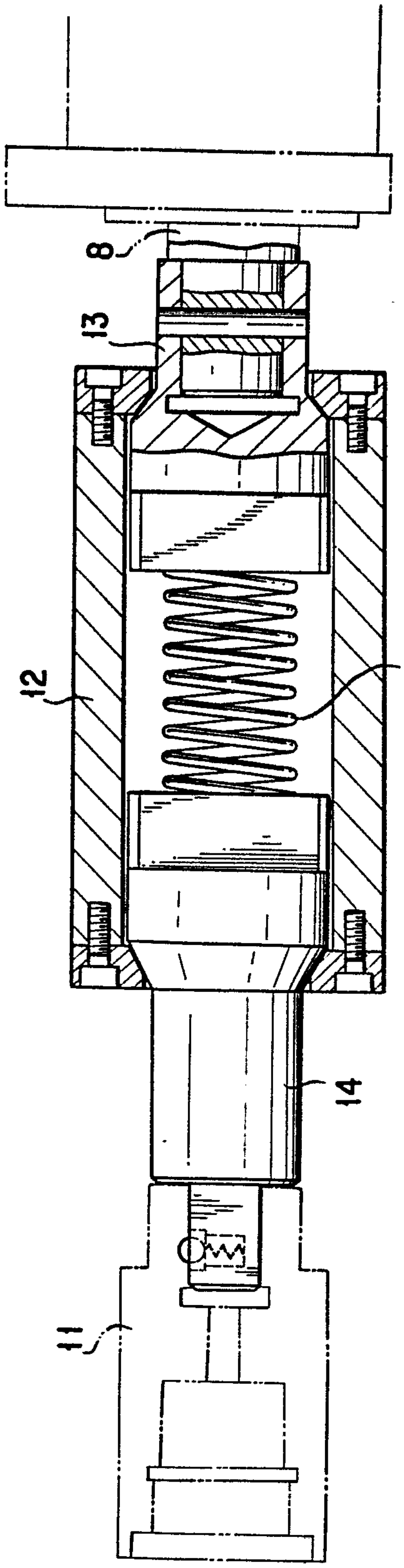


FIG. 8

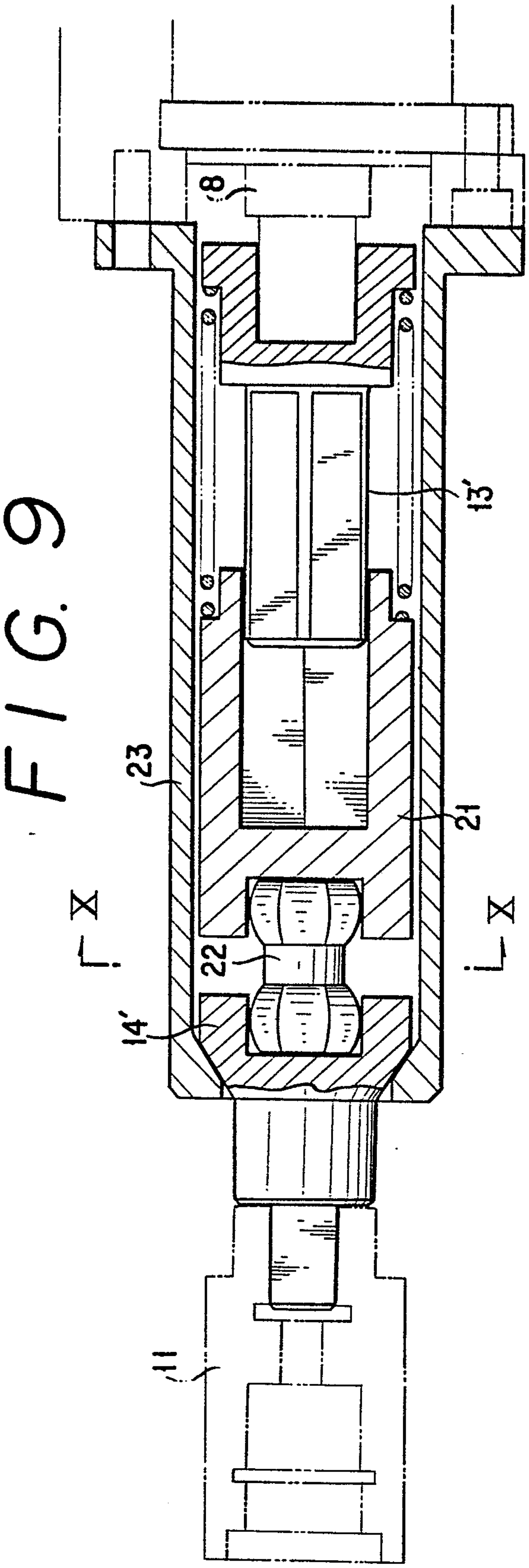


FIG. 9

0160951



FIG. 10

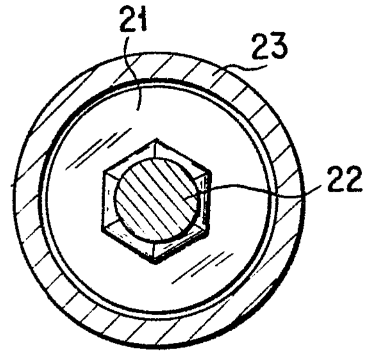


FIG. 11